(19) Europäisches Patentamt
European Patent Office
Office européen des brevets

(11) Veröffentlichungsnummer: **0 305 909 B1**

# (12) EUROPÄISCHE PATENTSCHRIFT

(45) Veröffentlichungstag der Patentschrift: **02.01.92**

(51) Int. Cl.5: **C07F 1/00**, C07F 1/02, C08F 4/46

(21) Anmeldenummer: **88113907.5**

(22) Anmeldetag: **26.08.88**

Die Akte enthält technische Angaben, die nach dem Eingang der Anmeldung eingereicht wurden und die nicht in dieser Patentschrift enthalten sind.

## (54) Bifunktionelle Alkaliverbindungen, Verfahren zu ihrer Herstellung und Verwendung als Polymerisationsinitiatoren.

(30) Priorität: **01.09.87 DE 3729144**

(43) Veröffentlichungstag der Anmeldung:
**08.03.89 Patentblatt 89/10**

(45) Bekanntmachung des Hinweises auf die Patenterteilung:
**02.01.92 Patentblatt 92/01**

(84) Benannte Vertragsstaaten:
**BE DE FR GB IT NL**

(56) Entgegenhaltungen:
**DD-A- 135 619**
**DE-A- 2 623 344**

(73) Patentinhaber: **BASF Aktiengesellschaft**
**Carl-Bosch-Strasse 38**
**W-6700 Ludwigshafen(DE)**

(72) Erfinder: **Bronstert, Klaus, Dr.**
**Gartenstrasse 26**
**W-6719 Carlsberg(DE)**
Erfinder: **Bohnet, Siegbert, Dr.**
**Collinistrasse 5**
**W-6800 Mannheim 1(DE)**
Erfinder: **Himmele, Walter, Dr.**
**Eichenweg 14**
**W-6909 Walldorf(DE)**
Erfinder: **Bott, Kaspar, Dr.**
**Werderstrasse 57**
**W-6800 Mannheim 1(DE)**

EP 0 305 909 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neuartige bifunktionelle alkalimetallorganische Verbindungen, insbesondere solche des Lithiums, ein Verfahren zu ihrer Herstellung sowie die Verwendung als Initiatoren für die anionische Polymerisation.

Es ist bekannt, alkalimetallorganische Verbindungen als Katalysatoren für die anionische Polymerisation von vorzugsweise Alkenylaromaten und/oder Dienen zu benutzen. Besonders gut geeignet sind Lithiumalkyle, da sie vergleichsweise stabil sind und im Gegensatz zu den entsprechenden Natrium- oder Kaliumalkylen auch in Kohlenwasserstoffen löslich sind und in diesen Polymerisationen ermöglichen. Lebende Polymere mit Lithiumendgruppen lassen sich ferner in besonders hohen Ausbeuten mit geeigneten Reagentien in endständig funktionalisierte Polymere umwandeln, z.B. in solche mit -OH, -SH oder Aminogruppen. Diese Reaktionen laufen am besten ab, wenn das Reaktionsmedium hauptsächlich aus Kohlenwasserstoffen besteht.

Während bekannte monofunktionelle Lithiumalkyle als Katalysatoren für die anionische Polymerisation alle Anforderungen erfüllen, weisen die bekannten bifunktionellen Initiatoren Mängel auf. Solche Katalysatoren werden insbesondere benötigt, wenn man an beiden Kettenenden funktionalisierte Polymere erzeugen will.

So können z.B. die Umsetzungsprodukte von Stilben (vgl. US-Patent 3 251 812) oder 1,1-Diphenylethylen und Lithium (vgl. US-Patent 3 663 634) nur in polaren Lösungsmitteln wie Ethern oder tertiären Aminen hergestellt und verwendet werden, weil sie in Kohlenwasserstoffen unlöslich und nicht stabil sind. Sie sind oft nicht aktiv genug bzw. verlieren beim Startschritt der Polymerisation einen Teil ihrer Aktivität, so daß sie zum Teil oder vorwiegend monofunktionell gewachsene Polymere und/oder Polymere mit breiter Molekulargewichtsverteilung liefern.

Ferner ist bekannt, mehrfunktionelle metallorganische Initiatoren für die anionische Polymerisation von Vinyl verbindungen oder Dienen durch Umsetzung von Lithiumalkylen mit diethylenisch ungesättigten aromatischen Verbindungen, z.B. Divinylbenzol oder Diisopropenylbenzol, herzustellen. In dem GB-Patent 2 111 057 werden solche Initiatoren beschrieben. Ihre Herstellung erfolgt in Gegenwart einer mehrfachen molaren Menge an tertiären Aminen. Trotzdem ist ihre Stabilität unbefriedigend und es ist bei der Herstellung von Polymeren die Bildung unlöslicher vernetzter Anteile nur schwer zu verhindern.

In der Zeitschrift Plaste und Kautschuk 26, (1979), Seiten 263 bis 264 wird in ähnlicher Form die Herstellung eines Initiators auf der Basis von Divinylbenzol mit der Funktionalität von 2,4 beschrieben, wobei auch hier in Gegenwart von tertiären Aminen gearbeitet wird. Polymerisiert man mit solchen in Gegenwart von polaren Verbindungen bzw. Lösungsmitteln hergestellten mehrfunktionellen Initiatoren Diene, so wird die Struktur der Polymerisate in der Weise verändert, daß die Monomeren vorwiegend in 1,2- bzw. 3,4-Position eingebaut werden und nicht, wie für viele Zwecke erwünscht, vorwiegend in 1,4-cis- oder 1,4-trans-Konfiguration. Auch diese Katalysatoren sind in Kohlenwasserstoffen nicht stabil.

Aus der DD 135 619 ist die Herstellung lithiumhaltiger Polymerisationsinitiatoren vom Typ der lithiumsubstituierten Polyarylethylene einerseits und solcher auf der Grundlage von 2-Methylstyrol andererseits bekannt.

Solche Polymerisationsinitiatoren führen jedoch, wie die Nacharbeitung ergeben hat, zu unvollständigem Umsatz, d.h. das Ziel, eine möglichst enge Molmassenverteilung zu erzielen, das ganz allgemein die anionische Polymerisation auszeichnet, wird mit diesen Initiatoren nicht erreicht.

Obgleich es Veröffentlichungen gibt (z.B. C.A.H. Acad. Sci., Ser. C., 283, [1976], Seiten 123 bis 125), nach denen das Arbeiten in Gegenwart von polaren Verbindungen nicht erforderlich ist, so zeigt die Überprüfung, daß mit solchen Initiatoren vorwiegend monofunktionell gewachsene Polymere gebildet werden. So zeigen z.B. mit solchen Katalysatoren durch aufeinanderfolgende Polymerisation von Butadien und Styrol hergestellte Polymere nicht die Eigenschaften von Elastomeren, wie sie für die erwarteten 3-Blockcopolymeren typisch wären, sondern eine für 2-Blockcopolymere charakteristische Plastizität.

Aufgabe der vorliegenden Erfindung war die Bereitstellung von auch in Medien, die überwiegend aus Kohlenwasserstoffen bestehen, löslichen und stabilen, bifunktionellen Alkalimetallinitiatoren, vorzugsweise des Lithiums, die keine monofunktionellen Anteile enthalten. Eine weitere Aufgabe war die Ausarbeitung eines für ihre Herstellung geeigneten Verfahrens, sowie die Verwendung der Dialkaliverbindungen für die Herstellung von an beiden Kettenenden gewachsenen lebenden Polymeren und deren Funktionalisierung.

Diese Aufgaben werden gelöst durch ein Verfahren zur Herstellung bifunktioneller Initiatoren für die Polymerisation von anionisch polymerisierbaren Monomeren, bei dem man eine alkenylaromatische Verbindung der allgemeinen Formel I

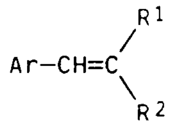

(I)

bei einer Temperatur zwischen -20 und +70 ° C, mit einem Alkalimetall unter Inertgasatmosphäre dimerisiert.

In der Formel I bedeutet

Ar ein aromatisches, auch polycyclisches Ringsystem, das Stickstoff enthalten oder durch Gruppen substituiert sein kann, die nicht mit alkalimetallorganischen Verbindungen reagieren;

$R^1$ lineares oder verzweigtes Alkyl, Alkenyl, Aralkyl oder Cycloalkyl mit 1 bis 22 C-Atomen, das Etherbrücken oder Thioetherbrücken enthalten kann, sofern diese nicht mit Lithiumalkyl reagieren, oder Aralkyl, in dem das der Doppelbindung benachbarte C-Atom aliphatisch ist oder Teil einer ringförmigen Brücke mit Ar, die außer einer Doppelbindung mindestens 2 aliphatische C-Atome aufweist;

$R^2$ Wasserstoff, lineares oder verzweigtes Alkyl, Cycloalkyl, Alkenyl oder Aralkyl mit 1 bis 22 C-Atomen, das auch Etherbrücken oder Thioetherbrücken enthalten kann, sofern diese nicht mit Lithiumalkyl reagieren, oder Aralkyl, in dem das der Doppelbindung benachbarte C-Atom aliphatisch ist, oder

$R^1$ und $R^2$ gemeinsam einen alicyclischen Ring.

Bevorzugt ist Ar ein Phenyl- oder Napthylrest, $R^1$ ein linearer oder verzweigter Alkylrest mit 1 bis 10 C-Atomen oder ein Cycloalkylrest mit 5 - 8 C-Atomen und $R^2$ Wasserstoff.

Besonders geeignete β-substituierte Alkenylaromaten im Sinne der Erfindung sind z.B. β-Alkylstyrole wie β-Methylstyrol, β-Ethylstyrol, β-Butylstyrol, β-Äthylhexylstyrol, m-Methoxy-β-methylstyrol, 1,3-Diphenylpropen-1 usw. Bevorzugt sind ferner Verbindungen, in denen Ar ein Phenylrest, $R^1$ und $R^2$ lineare oder verzweigte Alkylreste mit 1 bis 8 C-Atomen oder Bestandteile ein cycloaliphatischen Ringes mit 5 bis 12 C-Atomen sind und als Alkalimetall Lithium verwendet wird. Die Dimerisierung erfolgt dann, um eine höhere Ausbeute zu erreichen, bevorzugt in Gegenwart von geringen Mengen katalytisch wirkender polycyclischer Kohlenwasserstoffe.

Ein geeignetes β,β-Dialkylstyrol ist z.B. β,β-Dimethylstyrol. Diese Aufzählung ist nicht vollständig und soll keine Begrenzung der möglichen Ausgangsprodukte darstellen.

Die unter Wärmeentwicklung ablaufende Dimerisierung der Vinylaromaten erfolgt, indem man diese in Gegenwart eines oder mehrerer Ether, eines oder mehrer tertiärer Amine und gegebenenfalls inerter aliphatischer, alicyclischer und/oder aromatischer Lösungsmittel bei Temperaturen zwischen -20 - +70 ° C, vorzugsweise zwischen 0 und 40 ° C mit den Alkalimetallen umsetzt. Bei Konzentrationen von mehr als 100 m Mol je Liter ist eine gute Temperaturreglung erforderlich. Bei Mitverwendung inerter Kohlenwasserstoffe sollte die im Reaktionsmedium vorhandene Menge an Ethern und/oder tertiären Aminen größer als 2 Mol pro Mol β-Alkylvinylaromat betragen, um ausreichende Reaktionsgeschwindigkeit und vollständigen Umsatz zu gewährleisten.

Als Ether sind besonders gut geeignet aliphatische Ether wie z.B. Dimethylether, Diethylether, Dipropylether, Dibutylether, Diisopropylether, t-Butylmethylether usw. ferner auch Tetrahydrofuran und andere alicyclische Ether. Die Reaktion läuft in ihrer Gegenwart bei Zimmertemperatur zügig ab und ist häufig schon nach 15 bis 60 Minuten beendet, wobei mehr als 80 Gew.%, vorzugsweise mehr als 95 Gew.% der β-Alkylvinylaromaten dimerisiert werden. Benutzt man hingegen weniger gut geeignete aromatische Ether wie Anisol oder Phenetol, so dauert die Reaktion bei unvollständigem Umsatz mehr als 10 mal so lange. Im Reaktionsmedium liegt dann infolge unerwünschter Nebenreaktionen der Lithiumgehalt erheblich über dem Gehalt an Polymerisationsaktivität.

Als tertiäre Amine sind sowohl Trialkylamine, wie Triethyl- oder Trimethylamin usw. wie auch alicyclische oder aliphatisch/aromatische Amine wie N-Methylcyclohexylamin oder Dimethylanilin geeignet.

Neben Ethern kann bei einigen Ausgangsstoffen, insbesondere bei den weniger reaktiven β,β-Dialkylstyrolen oder den zu aktiven β-Methylvinylaromaten, der Zusatz katalytisch die Dimerisierung fördernder polycyclischer aromatischer Kohlenwasserstoffe in Mengen von 0,001 - 50, vorzugsweise 1 - 20 Mol%, bezogen auf die Ausgangsstoffe, die Ausbeute an Zielprodukt verbessern. Beispiele für polycyclische aromatische Kohlenwasserstoffe sind z.B. Phenanthren, Anthracen, Naphthalin, Diphenyl, m- oder p-Terphenyl. Als Alkalimetall wird bevorzugt Lithium verwendet, jedoch ergeben auch Natrium oder Kalium brauchbare Katalysatoren.

Bei der Reaktion ist eine mechanische Durchmischung zweckmäßig, da Lithium infolge seiner niedrigen Dichte auf der Oberfläche des flüssigen Reaktionsmediums schwimmt. Will man Natrium enthaltende Katalysatoren herstellen, so verwendetman zweckmäßig die flüssige Na-K-Legierung im Molverhältnis 1 : 1, aus der bei Überschuß nur das Natrium abreagiert.

Nach der Dimerisierung kann man leichtflüchtige Ether gegebenenfalls im Vakuum abdestillieren, wobei die Temperatur 35 °C, vorzugsweise 25 °C nicht überschreiten sollte. Zweckmäßig sind neben den Ethern höher als diese siedende Kohlenwasserstoffe vorhanden. Die Löslichkeit der erfindungsgemäßen Katalysatoren bleibt, wenn Tetrahydrofuran verwendet wird, meistens erhalten, solange mindestens 2 Mol Ether je Mol polymerisationsaktives Alkali vorhanden sind. Wird der Ether vollständig abdestilliert, so werden solche Katalysatoren, die aus β-Alkylstyrolen mit kurzen linearen Alkylgruppen hergestellt werden, schwer löslich und fallen teilweise oder ganz als meist hellorange gefärbte Kristalle aus. Am wenigsten löslich sind Katalysatoren aus β-Methylstyrol. Verwendet man solche Suspensionen zur Polymerisation, so gehen die Feststoffe nach einiger Zeit in Lösung. Es entstehen jedoch breitere Molekulargewichtsverteilungen. Katalysatoren aus β-Alkylstyrolen mit langen oder/und verzweigten Alkylgruppen bleiben jedoch gelöst. Sie zeigten diese Nachteile nicht.

Wurde die Herstellung der Katalysatoren in Gegenwart von Tetrahydrofuran vorgenommen, so gelingt es bei der Destillation normalerweise nur den Ethergehalt auf 1 Mol je Mol polymerisationsaktives Lithium zu verringern, da Tetrahydrofuran von den Katalysatoren sehr fest komplex gebunden wird. Verwendet man hingegen bei der Herstellung niedrig siedende aliphatische Ether, z.B. Dimethylether, Diethylether, Diisopropylether oder t-Butylmethylether oder niedermolekulare tertiäre Amine wie z.B. Triethylamin, so lassen sich diese ohne Schwierigkeiten auf Restgehalte von weniger als 0,2 Mol je Mol polymerisationsaktives Lithium verringern. Damit diese Katalysatoren ihre Löslichkeit in Kohlenwasserstoffen behalten, muß man als Ausgangsprodukte β-Alkylstyrole verwenden, in denen die Alkylgruppe wenigstens 4, vorzugsweise 6 C-Atome enthält. Die optimale Konfiguration hängt außerdem vom Rest Ar ab. Sie muß von Fall zu Fall ermittelt werden.

Katalysatoren, die wenig oder keine alicyclischen oder aliphatischen Ether bzw. solche, die nur aromatische Ether, wie Anisol oder Phenetol, enthalten, bauen bei der Polymerisation Diene vorwiegend in 1,4-Konfiguration ein. Bekanntlich sind solche Polymere weniger temperatur- oder vernetzungsanfällig und weisen bessere mechanische Eigenschaften auf als Polymere, die die Diene in 1,2- bzw. 3,4-Konfiguration enthalten.

Bei Verwendung von Katalysatoren, die weniger als 2 Mol aliphatischer oder cycloaliphatischer Ether enthalten, entstehen jedoch häufig Polymere mit höheren Molekulargewichten als aus dem Verhältnis Monomer/Katalysator rechnerisch erwartet wird. Vorzugsweise werden daher Katalysatoren mit gleich oder mehr als einem Mol Ether je Mol Polymerisationsaktivität eingesetzt.

Verwendet man Katalysatoren, die in Gegenwart von tertiären Aminen hergestellt wurden, so weisen die in die Polymeren eingebauten Diene auch bei hohen Verhältnissen Amin zu Polymerisationsaktivität, z.B. 5 bis 15, einen nur wenig erhöhten Gehalt an 1,2-Konfiguration auf.

Alle Lösungsmittel sowie die ß-substituierten Vinylaromaten müssen vor der Verwendung intensiv von Verunreinigungen befreit werden. Geeignet ist z.B. die Destillation über Metallalkyl wie Aluminiumtriethyl. Die Reaktionen sind unter Inertgasatmosphäre, z.B. trockenem, sauerstofffreiem Stickstoff oder Argon durchzuführen.

Die Lösungen der Dialkali- bzw. Dilithiumkatalysatoren sind intensiv gefärbt. Die Farbe liegt, je nach Ausgangsprodukt, zwischen orange, bordeauxrot und blauschwarz. Je Mol eingesetzten Alkenylaromat entstehen bis zu ein Mol an polymerisationsaktiven Gruppen. Dieser Gehalt, im folgenden PA genannt, läßt sich durch Titration eines aliquoten Teiles der Lösung unter Inertbedingungen mit i-Propylalkohol bis zum Farbumschlag auf farblos ermitteln. Er zeigt im allgemeinen gute Übereinstimmung mit dem Alkaligehalt der Lösung. Bei der Herstellung des Katalysators finden kaum lithiumverbrauchende Nebenreaktionen statt.

Bei der erfindungsgemäßen Reaktion entstehen im Idealfall 1,4-Di-lithium-1,4-di-aryl-2,3-di-alkyl-butane oder 1,4-Di-lithium-1,4-di-aryl-2,2,3,3-tetraalkylbutane:

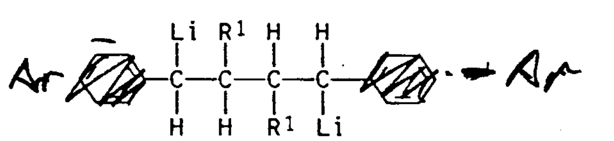

(Ia)

bzw.

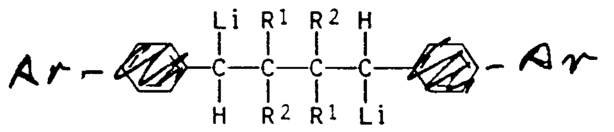

(Ib)

bzw. die entsprechenden anderen Alkaliverbindungen.

Es wurde nun gefunden, daß die Umsetzung dem Ideal am nächsten kommt, wenn man Alkenylaromaten verwendet, in denen $R^1$ ein aliphatischer Rest mit mindestens 2 C-Atomen und $R^2$ Wasserstoff ist. Mit nahezu theoretischer Ausbeute entstehen dann Dilithiumverbindungen gemäß Formel IIa bzw. IIb. Es spielt keine Rolle, ob als Ausgangsmaterial die Strukturisomeren $\beta$-cis-oder $\beta$-trans-Alkylvinylaromaten eingesetzt werden.

Verwendet man einen $\beta$-Methylvinylaromaten, z.B. $\beta$-Methylstyrol, so entstehen neben den Dimeren auch Oligomere, vorzugsweise tri- oder tetramere Dilithiumverbindungen mit vermutlich z.B. folgender Struktur (Tetramer):

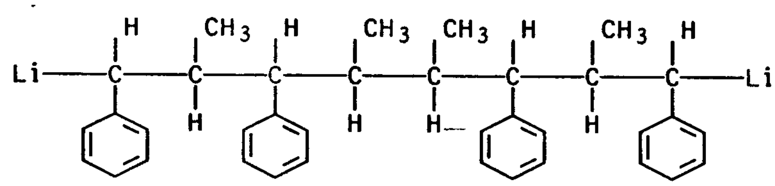

Obgleich diese Tetramere ebenfalls stabile bifunktionelle Initiatoren sind, läßt sich die Bildung der Oligomeren verhindern, wenn man die Reaktion in Gegenwart von katalytischen Mengen, z.B. 0,1 bis 10 Mol%, von mehrkernigen Aromaten durchführt. Geeignete Aromaten sind z.B. Phenanthren, Naphthalin, Anthracen, Diphenyl, die verschiedenen isomeren Terphenyle usw. Durch sie wird die Ausbeute an Polymerisationsaktivität, bezogen auf das eingesetzte $\beta$-Methylstyrol, erhöht.

Verwendet man als Ausgangsmaterial $\beta$,$\beta$-Dialkylvinylaromaten, so ist wegen ihrer geringen Aktivität der Umsatz häufig nicht vollständig. Führt man die Reaktion jedoch in Gegenwart der oben beschriebenen mehrkernigen Aromaten durch, so entstehen unter optimalen Bedingungen mit nahezu quantitativer Ausbeute die Dilithiumverbindungen gemäß Formel IIa bzw. IIb. Die erfindungsgemäßen Katalysatoren besitzen eine hohe Stabilität. Auch nach 100 Tagen Lagerung bei Zimmertemperatur wird keine Abnahme der Polymerisationsaktivität festgestellt.

Die erfindungsgemäßen Katalysatoren auf Lithiumbasis sind in Abhängigkeit von ihrer Zusammensetzung unterschiedlich gut in Kohlenwasserstoffen löslich. Mit den löslichen Spezies kann man Diolefine oder Alkenylaromaten in Gegenwart von geringen Mengen Ethern, z.B. 1 bis 5 Mol je Mol Polymerisationsaktivität, ebenso gut wie mit monofunktionellen Lithiumkatalysatoren zu Polymeren mit enger Molgewichtsverteilung polymerisieren. Die Funktionalisierung der entstehenden "lebenden" Polymeren ist mit hohen Ausbeuten möglich.

Die entsprechenden Natriumkatalysatoren sind in Kohlenwasserstoffen nur schwer löslich. Dennoch läßt sich auch mit Ihnen z.B. Styrol in Cyclohexan oder anderen Kohlenwasserstoffen polymerisieren, wobei sie in Lösung gehen und breitere Molekulargewichtsverteilungen als mit Lithiumkatalysatoren entstehen. In Gegenwart geringer Mengen Ether, z.B. 5 bis 10 Mol je Mol Polymerisationsaktivität, sind die Katalysatoren jedoch bei Wahl geeigneter Ausgangsprodukte löslich und ergeben enge Molekulargewichtsverteilungen. Schwieriger ist die Polymerisation von Dienen.

Insbesondere die erfindungsgemäßen Dilithiumverbindungen sind hervorragende bifunktionelle Initiatoren für die anionische Polymerisation von z.B. Alkenylaromaten und/oder Dienen. Sie enthalten im allgemeinen keine monofunktionellen Anteile. Bei der Polymerisation ergeben sie Polymere mit enger Molekulargewichtsverteilung, so daß die aus dem Verhältnis Katalysator : Monomer errechneten Molekulargewichte mit den durch Gelpermeationschromatographie ermittelten Werten relativ gut übereinstimmen.

Die erfindungsgemäßen Katalysatoren liefern bifunktionell wachsende Polymere. Polymerisiert man nacheinander Butadien und dann Styrol, so erhält man in 2 Stufen 3-Blockcopolymere, die in ihren Eigenschaften solchen Polymeren gleicher Zusammensetzung entsprechen, die nach bekannten Methoden mit monofunktionellem Katalysator durch 3-stufige Polymerisation Styrol→Butadien→Styrol hergestellt wurden. Nach oxidativem Abbau des Polybutadienteiles der Polymeren mit Osmiumtetroxid (vgl. Angew. Makromol. Chem. 26, [1972], Seite 207) haben die verbleibenden Polystyrolblöcke in beiden Fällen das gleiche Molekulargewicht.

Die Viskosität von mit erfindungsgemäßen Initiatoren hergestellten aktiven Polymerlösungen ist bei gleichem Molekulargewicht viel höher als die von mit monofunktionellen Katalysatoren hergestellten Polymeren, da die beiden ionischen Kettenenden infolge Assoziation ein reversibles Netzwerk bilden. Sie ist umso höher, je weniger Ether im Lösungsmittelgemisch enthalten ist. Die Assoziation wird durch Umwandlung der carbanionischen Endgruppen mit Terminierungsreagentien in z.B. Lithiumamid-, Lithiumalkoholat- oder Lithiumthiolatendgruppen so verstärkt, daß bereits bei niedrigen Polymerkonzentrationen und Molgewichten Gelbildung unter Entstehen einer aspikähnlichen Masse eintritt. Mit großer Rührerenergie und hohem Drehmoment kann die Masse zur Erreichung vollständigen Umsatzes durchmischt werden. Wenn dieses Gel mit Wasser oder aktiven Wasserstoff enthaltenden Verbindungen versetzt wird, so wird die ionische Vernetzung aufgehoben. Die Lösung wird wasserdünn.

Die Funktionalisierung der lebenden Kettenenden ist bekannt. Geeignete Funktionalisierungsreagentien sind z.B. Oxirane, die endständige primäre oder sekundäre Hydroxylfunktionen liefern (vgl. US-Patent 3 786 116), oder Thiirane, mit denen endständige Thiolgruppen eingeführt werden können. Nach der EP-A-0 211 395 oder der europäischen Patentanmeldung 87 103 893.1 kann man Polymere erhalten, die am Kettenende mindestens eine Aminogruppe enthalten. Die Umsetzungen werden in den genannten Schriften eingehend beschrieben, so daß sich hier eine Beschreibung erübrigt. Sie kann z.T. den folgenden Beispielen entnommen werden. Diese Polymeren können ferner, wenn sie ganz oder zum Teil aus Dienen aufgebaut wurden, hydriert werden, wobei die aliphatischen Doppelbindungen ganz oder zum Teil verschwinden. Die Hydrierung wird mit Hilfe von molekularem Wasserstoff und Katalysatoren auf Basis von Metallen oder Metallsalzen der 8. Nebengruppe des Periodensystems durchgeführt, entweder in homogener oder heterogener Phase. Die Verfahren sind bekannt und werden z.B. in dem US-Patent 3 113 986, der DE-B 1 222 266, DE-A 2 013 263, DE-B-1 106 961 oder DE-A 1 595 345 beschrieben.

Erfindungsgemäß aus Dienen und auch aus Vinylaromaten hergestellte funktionalisierte Polymere, die an den Kettenenden Amino- oder Hydroxylgruppen enthalten, können z.B. mit Diisocyanaten und anderen Reagentien vernetzt werden. Lösungen solcher Polybutadiene, versetzt mit Diisocyanaten, ausgegossen auf silikoniertes Papier und getrocknet, ergeben elastische, trockene, in Kohlenwassertoffen unlösliche Filme, die sich von der Unterlage abziehen lassen und hohe reversible Dehnungen aufweisen.

An beiden Kettenenden mit Mercapto-, Hydroxyl- oder Aminogruppen funktionalisierte Polymere sind als Präpolymere für Polyurethane, Epoxidharze und andere Harze oder für deren Modifizierung von besonderem Interesse. Die Herstellung von Epoxidharzen und von elastomeren Polyurethanen, bestehend aus einem "Hartsegment" aus aromatischen Polyisocyanaten und einem "Weichsegment" aus funktionalisierten flexiblen Makromolekülen ist bekannt und wird von H. P. Elias, in der Publikation Makromoleküle, Seiten 778-780 und 809-812, 4. Auflage, (1981), Hüttig und Wepf Verlag Basel-Heidelberg-New York und der dort zitierten Literatur beschrieben.

Polybutadiendiole als "Weichsegmente" in thermoplastischen Polyurethanen zeichnen sich durch besonders gute Entmischung von "Hart- und Weichsegmenten" aus, was aus anwendungs- und verarbeitungstechnischen Gründen erwünscht ist, wie dies auch von Becker und Braun, Kunststoffhandbuch Band 7, Polyurethane, Seite 33 (1983), 2. Auflage Hanser Verlag, München-Wien, beschrieben wird. Bei gleichem Molekulargewicht aus dem Gewichtsmittel weisen solche erfindungsgemäß hergestellten Öle wegen ihrer engen Molekulargewichtsverteilung eine viel niedrigere Viskosität auf als bekannte Präpolymere wie radikalisch hergestellte telechele Polybutadienöle, Polytetrahydrofuran oder Polyester. Sie sind daher viel besser berarbeitbar.

Erfindungsgemäß erhaltene Polymere weisen im allgemeinen Durchschnittsmolekulargewichte (Gewichtsmittel Mw) zwischen 5 000 und 500 000, vorzugsweise 3 000 bis 130 000 auf, ermittelt durch Gelpermeationschromatographie (GPC) und Vergleich mit standardisierten, zur Eichung geeigneter Polymeren (vgl. G. Glöckner, "Polymercharakterisierung durch Flüssigkeitschromatographie", Verlag A. Hüthig, Heidelberg, 1982). Gemessen wird in 0,25 gew.%iger Tetrahydrofuranlösung bei 23 °C und einer Durchflußgeschwindigkeit von 1,2 ml/min. Das Molekulargewicht wird zweckmäßig vor der Funktionalisierung ermittelt, da manche funktionalisierte Polymere von GPC-Säulen adsorbiert werden und diese unbrauchbar machen.

Die Aufarbeitung der Polymeren erfolgt nach bekannten Methoden, z.B. durch Fällen mit Nichtlösungsmitteln, durch Abdampfen des Lösungsmittels oder durch Wasserdampfdestillation. Auch Entgasung auf Entgasungsextrudern ist möglich.

Die folgenden Beispiele verdeutlichen die Erfindung. Sie bedeuten keine Begrenzung der Erfindung.

Ausgangsmaterialien:

Die $\beta$-substituierten Vinylaromaten wurden nach bekannten Methoden der organischen Chemie hergestellt. Für $\beta$-Monoalkylstyrole wurde z.B. Phenylmagnesiumbromid mit Aldehyden umgesetzt und die

entstehenden Alkylbenzylalkohole dehydratisiert. Zur Herstellung der $\beta$,$\beta$-Dialkylstyrole wurden sec.-Brommagnesiumalkyle mit Benzaldehyd umgesetzt und die entstehenden 1-Phenyl-2,2-di-alkyl-ethanole ebenfalls dehydratisiert. Die Reinigung der Endprodukte erfolgte durch Destillation über eine vielbödige Kolonne bei hohem Rücklaufverhältnis. Dabei fallen vorzugsweise die höher siedenden trans-Isomeren in hoher Reinheit an, während die in geringer Menge entstehenden cis-Isomeren im Vorlauf enthalten sind.

Die folgenden Alkenylaromaten wurden verwendet:

| | Alkenylaromat | Struktur | Kp.mm | Gehalt in Flächen-% durch Gaschromatographie |
|---|---|---|---|---|
| A | Trans-β-methylstyrol | 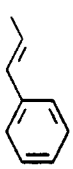 | 117-119/120 | 99,9 |
| B | Trans-β-ethylstyrol | 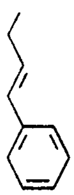 | 84/22 | 99,9 |
| C | Trans-β-butylstyrol | 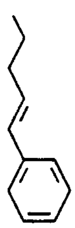 | 130/36 | 99,8 |
| D | Trans-β-iso-propylstyrol | 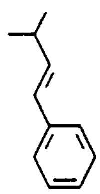 | 88/16 | 99,8 |
| E | Trans-β-hexylstyrol | 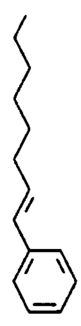 | 110-112/6 | 99,9 |
| F | Cis-β-hexylstyrol | 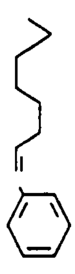 | 156/22 | 99,4 |
| G | Trans-1-vinyl-β-methyl-naphtalin | 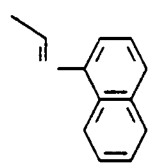 | 88/2 | 96,2 trans + 3,8 cis |
| H | Trans-1,3-diphenyl-propen-1 | 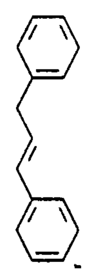 | 111-112/2 | 99,6 |

| | Alkenylaromat | Struktur | Kp.mm | Gehalt in Flächen-% durch Gaschromatographie |
|---|---|---|---|---|
| J | Trans-1,4-diphenyl-4,4-di-methyl-buten-1 | 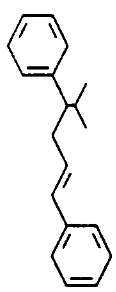 | 129-131/2 | 99,2 |
| K | Trans-β-pentylstyrol | 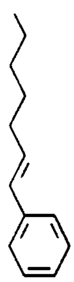 | 75/2 | 99,9 |
| L | Trans-β-nonylstyrol | 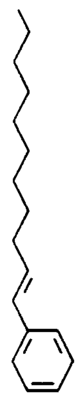 | 104/2 | 99,6 |
| M | Trans-1-phenyl-5-methyl-7,7-dimethyl-octen-1 | 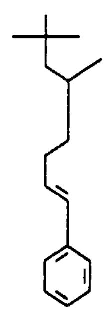 | 167-168/18 | 99,4 |
| N | Trans-1-phenyl-3-methyl-5,5-di-methyl-hexen-1 | 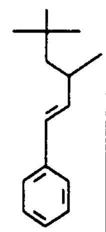 | 77/2 | 99,3 |
| O | Trans-1-phenyl-3-ethyl-octen-1 | 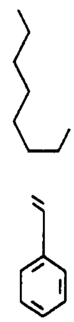 | 162/2 | 99,7 |
| P | β,β-Dimethylstyrol | 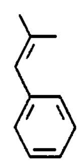 | 98/64 | 99,9 |

Die Lösungsmittel (Benzol, t-Butylbenzol, Methylcyclohexan, Octan, Tetrahydrofuran, Diethylether, Dibutylether, Diisopropylether, Triethylamin, Anisol) wurden durch Zugabe von soviel sec.-Butyllithium und einer geringen Menge als Indikator dienenden Styrols, daß eine bleibende Orangefarbe blieb, von Verunreinigungen befreit und unter Reinstickstoff abdestilliert. Die Aufbewahrung erfolgte unter Reinstickstoff.

Der bei -25 °C siedende Dimethylether wurde einer Druckflasche entnommen, in einer mit sec-Butyllithium-Methylcyclohexanlösung beschickten Waschflasche gereinigt und gasförmig in den Reaktor

gegeben.

Der handelsübliche Reinstickstoff wurde in 2 hintereinandergeschalteten Waschflaschen mit einer Mischung aus Weißöl, 1 Gew.% Styrol und 5 Gew.% Lithiumbutyl gewaschen.

Lithium wurde in Form eines 1 bis 5 mm großen Granulates verwendet, das u.a. von der Firma Merck-Schuchhardt vertrieben wird.

Natrium wurde in Form einer Legierung mit Kalium im Mol-Verhältnis 1 : 1 verwendet.

Für die Polymerisationsversuche wurde handelsübliches Butadien und Styrol eingesetzt. Vor der Verwendung wurden die Monomeren durch Abdestillieren von 0,5 Gew.% Triisobutylaluminium gereinigt.

Für die Funktionalisierung wurde 1,5-Diaza-bicyclo(3,1,0)hexan, gem. europäischer Patentanmeldung 87 103 893.1, im folgenden Propylendiaziridin genannt, verwendet.

Analytik:

a) Charakterisierung der erfindungsgemäßen Katalysatoren

aa) Bestimmung der Polymerisationsaktivität (PA)

Unter PA wird im folgenden der Gehalt an polymerisationsaktivem Lithium verstanden. 1 Mol difunktioneller Katalysator entspricht also 2 Mol PA.

Aus dem Reaktor oder dem Vorratsgefäß werden mit einer kalibrierten 5 $cm^3$ Einwegspritze aus Polypropylen (Hersteller Fa. Braun-Melsungen AG, BRD), die mit einer 15 cm langen Kanüle versehen ist, unter inerten Bedingungen (die Spritze wird durch mehrfaches Aufziehen und Entleeren des Reaktorinhaltes von Verunreinigungen befreit) eine ca. 2-3 mMol Polymerisationsaktivität enthaltende Menge an Lösung entnommen und durch eine Gummikappe aktivität enthaltende Menge an Lösung entnommen und durch eine Gummikappe in einen mit Reinstickstoff gespülten 500 $cm^3$ Kolben gegeben, dessen Vorlage von 100 $cm^3$ Toluol mit einem Magnetrührer gerührt wird. Verunreinigungen im Toluol wurden zuvor mit der Reaktionslösung bis auf schwache Gelbfärbung austitriert. Die intensiv gefärbte Lösung wird dann mit einer 5 $cm^3$ fassenden kalibrierten Injektionsspritze mit 1 n Isopropanol in absolutem Toluol auf farblos titriert. Die Gesamtmenge an Polymerisationsaktivität PA im Reaktor errechnet sich dann aus

$$\frac{\Sigma\ \text{Vorrat + Entnahme}\ (cm^3)}{cm^3\ \text{Entnahme}} \times cm^3\ 1\ n\ \text{i-Propanol} = \text{mMol PA}$$

ab) Bestimmung des Alkaligehaltes

Wie unter aa beschrieben, wird eine ca. 1 mMol PA entsprechende Menge Katalysatorlösung entnommen und unter Stickstoff in eine Mischung aus 10 $cm^3$ Cyclohexan und 1 $cm^3$ Methanol gegeben. Die farblose Mischung wird dann mit 20 $cm^3$ destilliertem Wasser ausgeschüttelt. Nach dem Absetzen wird der klare wäßrige Extrakt mit einer Injektionsspritze entnommen und die Lösung noch 2 x mit je 10 $cm^3$ Wasser extrahiert. Die vereinigten Extrakte werden in einem Erlenmeyerkolben so lange eingedampft, bis die organischen Lösungsmittel entfernt sind. Nach Abkühlen wird mit n/10 HCl und Phenolphthalein auf neutral titriert.

$$\frac{\Sigma\ \text{Vorrat + Entnahme}\ (cm^3)}{cm^3\ \text{Entnahme} \times 10} \times cm^3\ n/10\ \text{HCL} = \text{mMol Alkali}$$

ac) Bestimmung des Gehaltes der Katalysatoren an Oligomeren durch GPC-Analyse

Der organische Extrakt aus ab) wird bei 50 °C im Wasserbad mit einem Stickstoffstrom zur Trockene verdampft, danach bei Zimmpertemperatur im Vakuum Wasserreste entfernt. Der Rückstand wird gewogen und mit Tetrahydrofuran eine 0,1 gew.%ige Lösung hergestellt.

Die Trennung erfolgt durch Hochdruckflüssigchromatographie (HPLC) mit Tetrahydrofuran an einer ®Lichrogelsäule Typ PS4 der Fa. Merck, Darmstadt mit einer Durchlaufgeschwindigkeit von 1,0 $cm^2$/Min. Verwendet wurde die Gerätekombination L5000 LC-Controler und die Pumpe 655H-11 der Fa. Merck, Darmstadt.

Die Peaks für Ausgangsprodukt, Dimer und Oligomer werden an einer Eichkurve, die mit Oligomeren des Styrols geeicht wurde, identifiziert. Die Komponentenanteile werden aus den Flächenprozenten des Brechungsindexdetektors ermittelt (Fa. ERC, Typ 7510). Zusätzlich wird die Trennung im UV verfolgt, das wegen der hohen Extinktion besonders für die Erfassung der nicht umgesetzten $\beta$-Alkyl- bzw. $\beta$-Dialkylstyrole geeignet ist (UV-Detektor Nr. 655A der Fa. Merck, Darmstadt).

ad) Bestimmung der im Katalysator nach der destillativen Aufarbeitung noch enthaltenen Ether bzw. tertiären Amine.

5 $cm^3$ der Katalysatorlösung, die ca. 1 bis 3 mMol Polymerisationsaktivität enthalten, werden unter Stickstoff mit X $cm^3$ einer Lösung von 1n-Isopropanol in Toluol bis zur Entfärbung titriert.

Das gesamte Lösungsmittel wird nun in eine mit Methanol-/Kohlensäuremischung gekühlte Vorlage übergetrieben und der Gehalt an Ethern in Gew.% durch Gaschromatographie bestimmt. Es wurde ein Gaschromatograph der Fa. Shimadzu GC-3BT mit der Säule ®Carbowax 20M, bei 60 °C benutzt.

Das Molverhältnis Ether/Polymerisationsaktivität (PA) ergibt sich aus

$$\frac{\text{Gew.\% Ether/tert. Amine x } (5 + X)\ cm^3}{\text{mMol PA x } 7{,}2} = \frac{\text{mMol Ether/tert. Amine}}{\text{PA}}$$

b) Charakterisierung der erfindungsgemäßen Polymerisate

ba) Bestimmung des Molekulargewichts (MGW) durch GPC

Zur Bestimmung kamen die nicht funktionalisierten Proben zur Anwendung. Gemessen wurde mit einem GPC-Gerät der Fa. Waters. Die Molgewichte wurden an Hand von Eichkurven durch Vergleich mit standardisierten, zur Eichung geeigneten Polymeren bestimmt (vgl. G. Glöckner, "Polymercharakterisierung duch Flüssigkeitschromatographie", Verlag A. Hüthig, Heidelberg, 1982). Gemessen wurde in 0,25 %iger Lösung in THF bei 23 °C und einer Durchlaufgeschwindigkeit von 1,2 $cm^3$/Min.

Bei Blockcopolymeren wurde als MGW empirisch das der Zusammensetzung entsprechende arithmetische Mittel zwischen den Eichkurven der beiden Homopolymeren zugrundegelegt.

bb) Bestimmung der Viskositätszahl

Die Viskositätszahl (VZ) wurde bei 25 °C in Toluol (0,5 g Polymer in 100 $cm^3$ Toluol) gemäß DIN 51 562 bestimmt.

bc) Bestimmung des Stickstoffgehaltes

Der Gesamtstickstoffgehalt wurde nach Kjeldahl bestimmt.

bd) Bestimmung der mechanischen Eigenschaften

Die mechanischen Daten (Zugfestigkeit bei 300 % Dehnung, Reißfestigkeit und Reißdehnung) wurden bestimmt an Prüfkörpern, die nach DIN 53 455 aus zwischen Teflonscheiben gepreßten 2 mm starken Platten (Preßtemperatur 170 bis 180 °C, 60 bar) oder Folien (Preßtemperatur 150 °C, 10 bar) ausgestanzt werden.

be) Vernetzung mit Diisocyanat

5 g des Polymeren wurden in 25 $cm^3$ trockenem Cyclohexan gelöst und mit 0,33 mmol einer Lösung von Toluylendiisocyanat (TDI) in Cyclohexan versetzt. Nach Durchmischung wurde auf silikoniertes Papier gegossen und bei Zimmertemperatur getrocknet.

bf) Abbau von Butadien/Styrolblockcopolymeren und Bestimmung des Molgewichts der Polystyrolblöcke.

Das Verfahren des oxidativen Abbaues des Polybutadienteiles mit Peroxid/Osmiumtetroxid wird von Ph. Kubin-Eschger, Angew. Makromol. Chem. 26, (1972), Seite 207 detailliert beschrieben, so daß sich eine weitere Beschreibung erübrigt.

Beispiele 1 - 13

In den Beispielen 1 - 13 wird die Herstellung erfindungsgemäßer Katalysatoren beschrieben. Als Reaktor dient ein mit Magnetrührer (ohne Teflonummantelung) und Thermometer ausgerüsteter 500 $cm^3$ Vierhalskolben, der einen mit einer Gummikappe verschlossenen Stutzen besitzt und mit Reinstickstoff gespült werden kann. Der Reaktor ist in ein kühlbares Wasserbad eingebaut.

Der Reaktor wird jeweils mit 100 $cm^3$ einer hochgereinigten Mischung aus 94 Gew.% THF und 6 Gew.% Benzol und ca. 1,5 g handelsüblichen Lithiumgranulates sowie 25 mMol der in der folgenden Tabelle genannten $\beta$-Alkylvinylaromaten versetzt. Die Reaktion setzt bei 25 °C, in Abhängigkeit von der Reinheit der Produkte nach wenigen Minuten bis zu einer Std. unter Färbung des Inhaltes und 1 - 3 °C Temperaturerhöhung ein. Sie ist beendet, wenn Innen- und Badtemperatur wieder übereinstimmen, im allgemeinen nach 30 Minuten bis eine Stunde.

In der folgenden Tabelle sind der Gehalt an Polymerisationsaktivität (mMol PA) und Lithium (mMol), Umsetzungsgrad und Zusammensetzung der Katalysatoren und deren Farbe zusammengestellt.

Tabelle

| Beispiele | verw. Alkenylaromat | Gehalt an | | Restmonomer % | HPLC-Gehalt an | | | Farbe |
|---|---|---|---|---|---|---|---|---|
| | | PA*in mMol | Lithium in m Mol | | Dimer % | Trimer % | Tetramer % | |
| 1 | A | 13,75 | 14,3 | 5 | 43,3 | Σ 51,7 | | orange |
| 2 | B | 24 | 24,7 | 6,8 | 92,5 | - | 0,7 | rotorange |
| 3 | C | 24,3 | 23 | 9 | 91 | - | - | " |
| 4 | E | 26 | 27,6 | 2,2 | 97,7 | | | " |
| 5 | F | 27 | 25 | 3 | 96,9 | | | " |
| 6 | G | 24,3 | 23,6 | 3,5 | 71 | | 26 | |
| 7 | H | 14,7 | 16 | keine Analyse | | | | rotviolett |
| 8 | J | 13,1 | 14,0 | | | | | rotbraun |
| 9 | K | 25 | 27 | | | | | rotorange |
| 10 | L | 25 | 27 | | | | | " |
| 11 | M | 25 | 27 | | | | | " |
| 12 | N | 25 | 26 | | | | | " |
| 13 | O | 24,5 | 25 | | | | | " |
| Von den Beispielen 2 und 4, die bei Zimmertemperatur gelagert wurden, wurde im Abstand von 10 Tagen die PA bestimmt. Sie lag nach 100 Tagen bei 24 bzw. 25 mMol, bezogen auf eingesetzte Alkenylaromaten. | | | | | | | | |

* PA = Polymerisationsaktivität

Beispiel 14: Herstellung eines Dinatriumkatalysators

Es wird verfahren wie in den Beispielen 1 - 13 beschrieben, jedoch wird zur Dimerisierung mit 3 g einer flüssigen, Natrium und Kalium im Molverhältnis 1 : 1 enthaltenden Legierung gearbeitet. Als Alkenylaromat wurde trans-β-Hexylstyrol verwendet. Die Reaktion ist nach 30 Minuten beendet. Die dunkel orange-rote Lösung enthielt 22 m Mol PA, 23,6 m Mol Alkali. Das HPLC ergab 7,5 % Ausgangsprodukt und 87,8 % Dimer.

Beispiele 15 und 16

In diesen Beispielen wird die katalytische Wirkung eines polycyclischen Aromaten auf die Reaktion von β-Methylstyrol mit Lithium deutlich gemacht. Es wird die in Beispiel 1 beschriebene Apparatur verwendet, jedoch zusätzlich die in der folgenden Tabelle angegebene Mengen an polycyclischem Aromat verwendet.

| Beispiele | Phenanthren m Mol | Reaktionsprodukte | | | | | |
|---|---|---|---|---|---|---|---|
| | | Gehalt an | | Zusammensetzung (HPLC-Flächen %) | | | |
| | | PA m Mol | Lithium m Mol | Monomer | Dimer | Trimer | Tetramer |
| 15 | 1 | 26 | 28 | - | 95 | - | 5 |
| 16 | 0,25 | 23 | 23 | - | 86,2 | 5,2 | 8,5 |
| Vergleich (Beispiel 1) | - | 13,75 | 14,3 | 5 | 43,3 | Σ 51,7 | |

Beispiele 17 - 23

Hier wird die Umsetzung von β,β-Dimethylstyrol mit Lithium in Abwesenheit und Gegenwart von mehrkernigen Aromaten beschrieben. Es wird, wie bei Beispiel 1 beschrieben, gearbeitet, jedoch zusätzlich die in der folgenden Tabelle aufgeführten Mengen an polycyclischen Aromaten verwendet.

| Beispiel | Polycyclischer Kohlenwasserstoff | | Reaktionslösung | | | |
|---|---|---|---|---|---|---|
| | Art | Menge in m Mol | Gehalt in m Mol an | | Zusammensetzung (HPLC-Fl. %) | |
| | | | PA | Lithium | Monomer | Dimer |
| 17 | - | - | 18 | 23 | 45 | 54 |
| 18 | Phenanthren | 0,25 | 25 | 27 | - | 97,4 |
| 19 | " | 1,0 | 26 | 28 | - | 99,6 |
| 20 | Naphthalin | 0,25 | 22 | 25,5 | - | 99,5 |
| 21 | Phenanthren | 0,25 | 22 | 26,5 | - | 99,2 |
| 22 | Diphenyl | 0,5 | 20 | 23 | - | 96,2 |
| 23 | " | 2,5 | 24 | 25 | - | 98,4 |

Bei Phenanthren genügen besonders geringe Mengen, z.B. 1 Mol%, bezogen auf eingesetztes β,β-Dimethylstyrol, um die Umsetzung zu dem Dimeren vollständig zu machen. Unerwartet ist die hohe Polymerisationsaktivität des Vergleichsbeispiels Nr. 17. Die Eigenschaften des ohne polycyclischen Aromaten hergestellten Katalysators sind jedoch nicht optimal. Bei Polymerisationsversuchen liefert er große Anteile an monofunktionell gewachsenen Polymeren (s. Beispiel 33), wie sich aus deren mechanischen Eigenschaften und der Polymeranalytik ergibt.

Beispiel 24

Herstellung eines etherarmen Katalysators mit Tetrahydrofuran (THF).

In den Reaktor aus Beispiel 1 wurden 80 $cm^3$ THF, 20 $cm^3$ Benzol und 3 g Lithium gegeben. In dieser Mischung wurde 28,2 g = 150 mMol β-Hexylstyrol gegeben. Die Reaktion setzt unter Färbung und

Erwärmung sofort ein. Es wird gut gekühlt, so daß die Temperatur nicht über 28° C steigt. Nach 30 Minuten ist die Reaktion beendet. Die Analyse ergibt einen Gehalt an PA von 147 m Mol und von 150 m Mol Lithium.

141 mMol des Katalysators wurde mit einer Spritze in einen mit Reinstickstoff beatmeten 500 $cm^3$ Destillationskolben überführt, der zuvor mit einer aktiven Katalysatorlösung geringer Konzentration zur Entfernung von Verunreinigungen gespült wurde. Unter Rührung mit einem Magneten wurde das THF im Wasserbad bei 25° C im Vakuum so lange abgezogen, bis die Lösung viskos wird. Dann wurden 20 $cm^3$ einer 1 : 1 Mischung von Benzol/Cyclohexan, die zuvor mit dem gleichen Katalysator auf eine schwache Orangefarbe austitriert war, zugesetzt, und die Mischung erneut im Vakuum eingedampft, bis die Lösung viskos wurde. Der Rückstand wurde mit den gleichen Lösungsmittelgemiscch aufgenommen, mit einer Spritze unter Nachwaschen vollständig in ein unter Reinstickstoff stehendes Vorratsgefäß überführt, auf 100 $cm^3$ aufgefüllt, und der Gehalt an PA bestimmt.

PA: 141 m Mol. Von der Lösung wurden 2 $cm^3$ = 2,8 m Mol entnommen, mit 0,1 n Isopropanol/Toluollösung auf farblos titriert und, wie beschrieben, der THF-Gehalt durch Gaschromatographie bestimmt. Es wurde 0,21 g THF entsprecchend 2,92 m Mol gefunden. Das Verhältnis THF/PA betrug also 1,04.

Beispiel 25

Herstellung eines etherarmen Katalysators mit Tetrahydrofuran.

In den Reaktor aus Beispiel 1 wurden 40 $cm^3$ THF, 2,6 $cm^3$ Anisol (27 m Mol), 3 g Lithiumgranulat und 4 g β-Butylstyrol (25 m Mol) gegeben. Die Reaktion setzt sofort unter Wärmeentwicklung ein. Nach 60 Minuten werden 26,5 m Mol PA und 24,5 m Mol Lithiumgehalt gemessen.

Der Inhalt des Reaktors wird unter Spülen mit Cyclohexan mit einer Spritze in den Destillationskolben aus Beispiel 24 überführt und 8 $cm^3$ t-Butylbenzol zugegeben. Unter Rührung mit einem blanken Eisen-Magnet wurden die leichtsiedenden Lösungsmittel im Wasserbad von 25° C mit steigendem Vakuum so lange in eine mit Methanol/Kohlensäure gekühlte Vorlage abdestilliert, bis ein Vakuum von 0,5 m bar erreicht und die Temperatur im Kolben wieder auf 23° C angestiegen ist. Gegen Ende der Operation fällt der Katalysator aus. Es entsteht eine feinteilige, hellorange Suspension. Mit Hilfe der Spritze wird sie unter Nachwaschen mit einer Mischung Cyclohexan/Benzol vollständig in ein unter Reinstickstoff stehendes Vorratsgefäß überführt und auf 50 $cm^3$ aufgefüllt.

Gehalt an Polymerisationsaktivität: 25 m Mol (berechnet auf die eingesetzte Menge an β-Butylstyrol). Verhältnis THF/PA = 1,01

Beispiel 26

Herstellung eines etherarmen Katalysators mit Diethylether.

In den Reaktor aus Beispiel 1 wurden 15 $cm^3$ Diethylether, 3 g Lithiumgranulat, 10 $cm^3$ Cyclohexan, 16 $cm^3$ 2-Butylbenzol und 10,75 g (50 m) Mol trans-1-Phenyl-3-ethylocten-1 gegeben. Die Reaktion, die sofort einsetzt, läuft unter Kühlung bei Temperaturen zwischen 25 und 28° C innerhalb von 30 Minuten ab. Es wird eine PA von 48,8 m Mol und ein Lithiumgehalt von 45,5 m Mol gemessen.

Der Reaktorinhalt wird unter Spülen mit 10 $cm^3$ Cyclohexan in den Destillationskolben von Beispiel 24 überführt und unter Rühren mit einem Magneten am Wasserbad von 25° C solange bei steigendem Vakuum destilliert bis ein Vakuum von 0,5 mbar erreicht, die Temperatur im Sumpf wieder auf 23° C gestiegen und die Lösungs viskos wird. Nach Aufheben des Vakuums wird mit 20 $cm^3$ Cyclohexan verdünnt, die Lösung mit einer Spritze unter Nachwaschen mit Cyclohexan vollständig in ein unter Reinstickstoff stehendes Vorratsgefäß überführt und auf 50 $cm^3$ aufgefüllt.

PA: 46 m Mol Verhältnis Diethylether/PA = 0,123

Beispiel 27

Herstellung eines etherarmen Katalysators mit Diisopropylether.

Beispiel 26 wurde wiederholt, jedoch an Stelle des t-Butylbenzols n-Octan und an Stelle des Diethylethers Diisopropylether verwendet.

Es wurden eine PA von 49 m Mol, ein Lithiumgehalt von 50,7 m Mol und ein Mol-Verhältnis Ether/PA =

0,112 gefunden.

Beispiel 28

Herstellung eines etherarmen Katalysators mit Dimethylether (DMA)

In den Reaktor von Beispiel 1 wurden 50 $cm^3$ Methylcyclohexan, 5,375 g (25 m Mol) Trans-1-phenyl-3-ethyl-octen-1 gegeben und gereinigtes Dimethylethergas über die mit einem Magnetrührer durchmischte Flüssigkeit geleitet. Die Reaktion setzt nach 5 Minuten unter Anstieg der Temperatur von 21,5° auf 23,5° ein und ist nach einer Stunde vollständig. Es werden 25,2 m Mol PA und 24,4 m Mol Lithiumgehalt gemessen.

Der Reaktorinhalt wird unter Spülen mit 10 $cm^3$ Methylcyclohexan in den Destillationskolben von Beispiel 24 überführt und unter Rühren bei zuletzt 10 torr 40 $cm^3$ des Kolbeninhaltes bei Innentemperaturen um 0° C abdestilliert. Nach Aufheben des Vakuums wird die Lösung mit 15 $cm^3$ Methylcyclohexan verdünnt, unter Nachwaschen in ein unter Reinstickstoff stehendes Vorratsgefäß überführt und auf 60 $cm^3$ aufgefüllt.

PA (bezogen auf Einsatzmenge): 25,5 m Mol, Lithiumgehalt 24,7 m Mol.

Molverhältnis DMA/PA = 0,087

Beispiel 29

Herstellung eines Katalysators in Gegenwart von Triethylamin

In den Reaktor von Beispiel 1 wurden 35 $cm^3$ Methylcyclohexan, 15 $cm^3$ Triethylamin, 3 g Lithiumgranulat und 25 m Mol Trans-1-phenyl-3-ethyl-octen-1 gegeben. Die Reaktion setzt nach 5 Minuten ein und ist nach 45 Minuten vollständig. Der Reaktor enthält dann 25,2 m Mol PA und 24,5 m Mol Lithium.

Polymerisationsversuche

Beispiele 30 - 38

Für die Polymerisationsversuche dient als Reaktor ein mit einem Rührer, einem mit Sole von -30° C betriebenem Sole-Rückflußkühler, einem kalibrierten, ebenfalls mit Sole-Rückflußkühler versehenem Tropftrichter, einem mit einer Gummikappe verschlossenen Stutzen sowie einer Reinstickstoffspülung versehener 10 l-Glaskolben mit Heiz- bzw. Kühlmantel. Der Stickstoff wird durch Waschen mit einem 2 Gew.% Lithiumbutyl enthaltenden Weißöl von Spuren von Feuchtigkeit und Sauerstoff befreit. Der Reaktor wird zunächst mit einer Lösung von Lithiumbutyl in Cyclohexan, der etwas Styrol zugesetzt wurde, ausgekocht. Die als Indikator für die Aktivität der Lösung dienende orangene Farbe muß bis zum Schluß vorhanden sein. Die Lösung wird abgezogen und der Kessel mit 3 l Cyclohexan befüllt, das zuvor über eine Säule mit Molekularsieb gereinigt wurde. Die noch vorhandenen Verunreinigungen werden bei 40° C mit der erfindungsgemäßen Katalysatorlösung durch die Gummikappe mit einer kalibrierten Spritze bis zum Auftreten eines geringen Orangetones austitriert.

Bei den folgenden Beispielen 30 - 38 wurden 3-Blockcopolymere S-B-S der Zusammensetzung 27 Gew.% Styrol, 73 Gew.% Butadien mit dem Zielmolekulargewicht 60 000 hergestellt. Dazu wurden in den Reaktor nach dem Austitrieren jeweils 10 m Mol der in der folgenden Tabelle bezeichneten Katalysatoren gegeben, dann 50 $mm^3$ (31,3 g) Butadien zugefügt, auf 45° C aufgeheizt und das restliche Butadien (insgesamt 300 $cm^3$ bzw. 187,5 g) unter Erwärmung auf 70° C zulaufen gelassen. Nach Zulaufende wurde eine Stunde bei 60° C gehalten und nach Entnahme einer Probe 89 $cm^3$ (81 g) Styrol zugegeben.

Nach 60 Minuten wurde auf 40° C abgekühlt, eine weitere Probe entnommen und 11 m Mol Propylendiaziridin zugegeben. Dabei steigt die Viskosität zur Gelstruktur an. Nach ca. einer Stunde wurde durch Zugabe von 1 $cm^3$ Ethanol abgebrochen und die dünne Lösung durch Eingießen in 5 l Ethanol, das 0,5 Gew.% Di-t-butyl-p-kresol enthielt, gefällt. Nach mehrfachem Auskneten mit Alkohol wurden die Polymeren bei 60° C über Nacht im Vakuumtrockenschrank getrocknet.

Die folgenden Tabellen geben die analytischen Meßwerte und die mechanischen Eigenschaften wieder.

Beispiele 30 - 38

Polymerisation von 3-Block Styrol-Butadien-Styrol-Copolymeren: Analytische Daten

| Nr. | Katalys. v. Beispiel | Verhältnis PA:THF | THF Gew.% in Lösung | GPC PB Mol.Gew. | GPC PB+PS Mol.Gew. | VZ | Abbau durch Osmiumtetroxid Polystyrolblöcke gef./ber.* | Ges.%PS | VZ | Stickstoffgehalt Gew.% | Stickstoffgehalt Gew.% ber.** | Polymer Eigenschaften |
|---|---|---|---|---|---|---|---|---|---|---|---|---|
| 30 | 1 | 7,4 | 0,22 | 43000 | 60000 | 71,3 | 9000/8100 | 25,3 | 9,1 | 0,079 | 0,093 | zähe |
| 31 | 2 | 45 | 1,37 | 52000 | 70000 | 80,8 | 10000/9450 | 29 | 11,9 | 0,089 | 0,080 | " |
| 32 | 3 | 22 | 0,67 | 53000 | 70000 | 97,6 | 7000/9450 | 29,6 | 12,5 | 0,075 | 0,080 | " |
| 33 | 4 | 22,3 | 0,69 | 45000 | 60000 | 78,1 | 9000/8100 | 28,6 | 10,1 | 0,10 | 0,093 | " |
| 34 | 24 | 1 | 0,03 | 50000 | 80000 | 105,8 | 6500/10800 | 24,3 | 10,8 | 0,074 | 0,070 | " |
| 35 | 8 | | | 50000 | 70000 | 81 | -- -- | -- | -- | 0,085 | 0,080 | " |
| 36 | 6 | 22 | 0,67 | 75000/ 50000*** | 110000/ 70000*** | 79 | 6500 | 29,5 | 11,7 | 0,088 | 0,08 | " |
| 37 | 17 | 45 | 1,37 | 35000 | 43000 | 66,8 | 10000/5800 | 26,2 | 11,0 | 0,080 | 0,13 | plastisch |
| 38 | 19 | 44 | 1,34 | 38000 | 50000 | 63,8 | 9000/6750 | 26,5 | 11,0 | 0,078 | 0,11 | zähe |

* Das Molekulargewicht der Polystyrolblöcke wurde für das durch GPC ermittelte Molgewicht der Ausgangspolymeren errechnet unter der Annahme, daß beide Kettenenden aus Polystyrolblöcken bestehen.

** Der theoretische Stickstoffgehalt wurde ermittelt unter der Annahme, daß jedes Kettenende 2 Aminogruppen trägt.

*** 2 Polymerpeaks

Beispiele 30-38

Mechanische Eigenschaften und Konfiguration

| Nr. | Katalys. v. Beispiel | Zugfestigkeit bei 300 % Dehnung N/mm$^2$ | Reißfestigkeit N/mm$^2$ | Reißdehnung % | Butadienkonfiguration FTIR | | |
|---|---|---|---|---|---|---|---|
| | | | | | % 1,4-trans | % 1,2- | % 1,4-cis |
| 30 | 1 | 2.54 | 5.91 | 771 | 27.4 | 54.1 | 18.5 |
| 31 | 2 | 2.03 | 11.59 | 813 | 25.5 | 57.1 | 17.4 |
| 32 | 3 | 2.65 | 11.65 | 879 | 32.5 | 46.2 | 21.3 |
| 33 | 4 | 2.23 | 7.65 | 751 | 32.3 | 48.0 | 19.6 |
| 34 | 4 | 2.29 | 4.95 | 784 | 46.2 | 27.5 | 26.4 |
| 35 | 6 | 3.99 | 11.54 | 882 | 31.6 | 49.0 | 19.4 |
| 36 | | | | | | | |
| 37 | 17 | nichtmeßbar | | | 25.1 | 57.3 | 17.6 |
| 38 | 19 | 1.88 | 4.05 | 815 | 26.0 | 56.8 | 17.2 |
| vergleichsversuch*** | | 1.95 | 9.62 | 577 | 57.4 | 12.2 | 30.4 |

*** Das SBS-3-Blockcopolymerisat, 27 Gew.% Styrol, 73 Gew.% Butadien und MGW: 68 000, wurde mit Lithiumbutyl durch aufeinanderfolgende Polymerisation von Styrol→Butadien→Styrol in Cyclohexan bei 70 ° C nach bekannten Methoden hergestellt. Alle Polymeren mit Ausnahme vom Vergleichsversuch ergeben, aus ihrer Lösung in Cyclohexan mit Toluylendidisocyanat versetzt; gegossen und getrocknet, elastische, unlösliche Filme.
FTIR = Fourieranalyse der Infrarotspektren

Aus den Beispielen ergeben sich folgende Aussagen:

1. Mit den erfindungsgemäßen Katalysatoren werden mit Ausnahme vom Beispiel 37 mit den durch unterschiedliche MGW-Verteilungen bedingten Schwankungen die angestrebten bzw. rechnerisch erwarteten MGW's erhalten.
2. Aus dem Stickstoffgehalt der Polymeren und dem MGW der aus ihnen durch Osmiumtetroxidabbau erhaltenen Polystyrolblöcke ergibt sich, daß mit Ausnahme vom Beispiel 37 Dreiblockcopolymere vorliegen. Diese Aussagen werden durch die mechanischen Eigenschaften bestätigt, die dem Vergleichsversuch ähnlich sind.
3. Im Beispiel 37 sind erhebliche oder überwiegende Anteile an Zweiblockcopolymer vorhanden.
4. Durch Polymerisation in Gegenwart sehr geringer THF-Mengen (Beispiel 34) enthält der Polybutadienblock erwartungsgemäß geringere Anteile an 1,2-Konfiguration.

Beispiele 39 - 44

Ein mit Magnetrührer, Wasserbad, Thermometer und Reinstickstoffspülung ausgerüsteter 500 cm$^3$ Kolben wurde jeweils mit 100 cm$^3$ gereinigten Toluol und 10 cm$^3$ Styrol beschickt. Die Vorlage wurde mit einer Spritze mit dem zu benutzenden Katalysator durch eine Gummimembran auf schwachen Orangefarbton austitriert und sofort eine 0,5 m Mol Polymerisationsaktivität entsprechende Menge an Katalysatorlösung zugegeben. Bei 50 ° C wurde in einer Stunde auspolymerisiert, auf 40 ° C abgekühlt und mit 0,6 m Mol Propylendiazinridin umgesetzt. Nach 40 Minuten wird das Polystyrol durch Eingießen in Ethanol gefällt, auf der Nutsche mit Alkohol gewaschen und getrocknet. An den Polymeren wurden die folgenden Werte gemessen.

| Nr. | Katalys. v. Beispiel | MGW | | N-Gehalt in % (Kjeldahl) | |
|---|---|---|---|---|---|
| | | ber | GPC | gefunden | ber. |
| 39 | 1 | 40000 | 57000 | 0.094 | 0.098 |
| 40 | 5 | " | 47000 | 0.13 | 0.12 |
| 41 | 10 | " | 48000 | 0.12 | 0.12 |
| 42 | 18 | " | 60000 | 0.089 | 0.093 |
| 43 | 14 | " | 75000 | 0.012 | 0.075 |
| 44 | 29 | " | 48000 | 0.11 | 0.12 |

Im Beispiel 43 wurde der bifunktionelle Natriumkatalysator von Beispiel 14 verwendet. Es entsteht ein Polystyrol mit breiter Molekulargewichtsverteilung. Die Funktionalisierung verläuft nur mit schlechter Ausbeute.

Beispiel 45

Herstellung eines funktionalisierten Polybutadienöles.

In der Apparatur gemäß Beispiel 1 wurden 3000 $cm^3$ Cyclohexan mit dem Katalysator aus Beispiel 24 auf schwache Orangefarbe austitriert und dann eine 100 m Mol PA entsprechende Katalysatormenge aus Beispiel 24 zugegeben. Dann wurden 50 $mm^3$ Butadien zugegeben, auf 60 °C erwärmt und bei dieser Temperatur weitere 350 $cm^3$ (zusammen 250 g) Butadien so zugefahren, daß gerade kein Rückfluß auftritt. Nach Beendigung des Zulaufes wird noch 30 Minuten bei 60 °C gehalten, dann auf 40 °C abgekühlt und mit 220 m Mol Propylendiaziridin funktionalisiert, wobei die Lösung gallertartig viskos wird. Nach 30 Minuten Rühren wird der Reaktorinhalt mit 5 l Methanol gefällt. Das absetzende Polybutadienöl wird 3mal mit je 1 l Methanol ausgerührt, mit 0,5 g Di-t-butyl-p-kresol gemischt und in Vakuum bei 60 °C getrocknet. Es entsteht ein gießbares Polybutadienöl vom MGW 5500 (GPC) und enger MGW-Verteilung. Der Stickstoffgehalt nach Kjeldahl beträgt 0,95 % (Theorie: 1,02 %). Die FTIR-Analyse zeigt eine Konfiguration von 41,1 % 1,2-, 23,4 % 1,4-cis und 35,5 % 1,4-trans-Struktur für das eingebaute Polybutadien.

In 5 g des Öles in einem Penicillinglas wurden bei Zimmertemperatur mit einem Glasstab schnell 4 m Mol Hexamethylendiisocyanat (0,672 g) eingerührt und auf Silikonpapier gegossen. Die Mischung erstarrt in Minuten zu einem farblosen, elastischen Gummi.

Beispiel 46

Herstellung eines funktionalisierten Polybutadienöles.

Es wurde gearbeitet wie im Beispiel 45, jedoch werden 15 m Mol des Katalysators von Beispiel 25 verwandt und 150 g Butadien polymerisiert. Das Polymer hat eine MGW von 11 000 und eine enge MGW-Verteilung. Der Stickstoffgehalt beträgt nach Kjeldahl 0,55 % (berechnet 0,52 %). Das eingebaute Polybutadien hat 39 % 1,2-, 24 % cis-1,4- und 37 % trans-1,4-Konfiguration.

## Patentansprüche

1. Bifunktionelle Initiatoren für die anionische Polymerisation, nämlich 1,4-Dilithium-1,4-diaryl-2,3-dialkylbutan und/oder 1,4-Dilithium-1,4-diaryl-2,2,3,3-tetraalkylbutan der allgemeinen Formeln Ia bzw. Ib

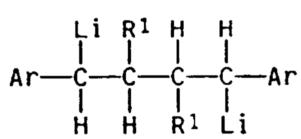

(Ia)

bzw.

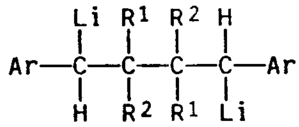

(Ib)

in denen bedeutet

Ar ein aromatisches, auch polycyclisches Ringsystem, das Stickstoff enthalten oder durch Gruppen substituiert sein kann, die nicht mit alkalimetallorganischen Verbindungen reagieren;

$R^1$ lineares oder verzweigtes Alkyl, Alkenyl, Aralkyl oder Cycloalkyl mit 1 bis 22 C-Atomen, das Etherbrücken oder Thioetherbrücken enthalten kann, sofern diese nicht mit Lithiumalkyl reagieren, oder Aralkyl, in dem das der Doppelbindung benachbarte C-Atom aliphatisch ist oder Teil einer ringförmigen Brücke mit Ar, die außer einer Doppelbindung mindestens 2 aliphatische C-Atome aufweist;

$R^2$ Wasserstoff, lineares oder verzweigtes Alkyl, Cycloalkyl, Alkenyl oder Aralkyl mit 1 bis 22 C-Atomen, das auch Etherbrücken oder Thioetherbrücken enthalten kann, sofern diese nicht mit Lithiumalkyl reagieren, oder Aralkyl, in dem das der Doppelbindung benachbarte C-Atom aliphatisch ist, oder

$R^1$ und $R^2$ gemeinsam einen alicyclischen Ring

wie sie erhalten werden, wenn man eine entsprechende alkenylaromatische Verbindung I

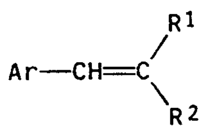

zwischen -20 und $+70^\circ$ C mit Lithium umsetzt.

**2.** Verwendung der Initiatoren gemäß Anspruch 1 für die anionische Polymerisation

## Claims

**1.** A bifunctional initiator for anionic polymerization, specifically a 1,4-dilithium-1,4-diaryl-2,3-dialkylbutane or a 1,4-dilithium-1,4-diaryl-2,2,3,3-tetraalkylbutane, of the general formula Ia or Ib

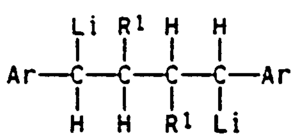

(Ia)

or

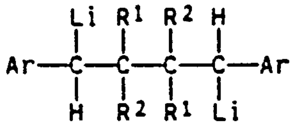

(Ib)

where

Ar is an aromatic monocyclic or polycyclic ring system which may contain nitrogen or be substituted by groups which do not react with alkali organometallic compounds,

$R^1$ is linear or branched alkyl, alkenyl, aralkyl or cycloalkyl of from 1 to 22 carbon atoms, which may contain ether or thioether bridges, provided they do not react with lithium alkyl, or aralkyl

in which the carbon atom adjacent to the double bond is aliphatic or part of a ring bridge to Ar which in addition to a double bond has at least 2 aliphatic carbon atoms,

$R^2$ is hydrogen, linear or branched alkyl, cycloalkyl, alkenyl or aralkyl of from 1 to 22 carbon atoms, which can also contain ether or thioether bridges, provided they do not react with lithium alkyl, or is aralkyl in which the carbon atom adjacent to the double bond is aliphatic, or $R^1$ and $R^2$ together form an alicyclic ring,

as obtained on reacting an appropriate aromatic alkenyl compound I

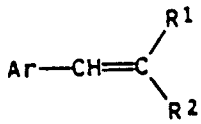

with lithium at from -20 and +70 °C.

2. Use of an initiator as claimed in claim 1 for anionic polymerization.

## Revendications

1. Initiateurs bifonctionnels pour la polymérisation anionique, à savoir le 1,4-dilithium-1,4-diaryl-2,3-dialkylbutane et/ou le 1,4-dilithium-1,4-diaryl-2,2,3,3-tétraalkylbutane des formules générales Ia ou Ib

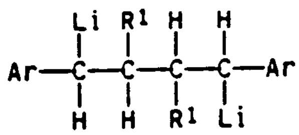

(Ia)

ou

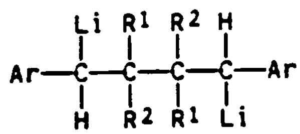

(Ib)

dans lesquelles

Ar désigne un système cyclique aromatique, pouvant aussi être polycyclique, pouvant contenir de l'azote ou être substitué par des groupes ne réagissant pas avec des composés organiques de métaux alcalins;

$R^1$ représente un radical alkyle, alcényle, aralkyle ou cycloalkyle linéaire ou ramifié contenant 1 à 22 atomes de carbone, pouvant contenir des ponts éther ou thioéther dans la mesure où ceux-ci ne réagissent pas avec un reste lithiumalkyle, ou représente un radical aralkyle dans lequel l'atome de carbone voisin de la double liaison est aliphatique, ou fait partie d'un pont cyclique avec Ar, ce pont présentant outre une double liaison ou moins deux atomes de carbone aliphatiques;

$R^2$ représente un atome d'hydrogène, un radical alkyle, cycloalkyle, alcényle ou aralkyle linéaire ou ramifié contenant 1 à 22 atomes de carbone, pouvant aussi contenir des ponts éther ou thioéther, dans la mesure où ceux-ci ne réagissent pas avec un reste lithiumalkyle, ou représente un radical aralkyle dans lequel l'atome de carbone voisin de la double liaison est aliphatique, ou bien

$R^1$ et $R^2$ forment ensemble un noyau alicylique,

tels qu'ils sont obtenus, lorsqu'on fait réagir avec du lithium un composé alcénylaromatique I correspondant

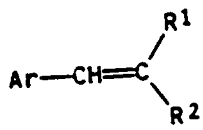

(I)

à une température comprise entre -20 et +70 °C.

2. Utilisation des initiateurs suivant la revendication 1 pour la polymérisation anionique.